(19) **Europäisches Patentamt**
**European Patent Office**
**Office européen des brevets**

(11) **EP 3 753 085 B1**

(12) **FASCICULE DE BREVET EUROPEEN**

(45) Date de publication et mention
de la délivrance du brevet:
**22.12.2021 Bulletin 2021/51**

(21) Numéro de dépôt: **19713710.2**

(22) Date de dépôt: **06.03.2019**

(51) Int Cl.:
**H02J 3/36** *(2006.01)*

(86) Numéro de dépôt international:
**PCT/EP2019/055602**

(87) Numéro de publication internationale:
**WO 2019/174999 (19.09.2019 Gazette 2019/38)**

(54) **PROCEDE DE COMMANDE D'UN LIEN DE TRANSMISSION ELECTRIQUE INCLUANT UNE LIGNE HAUTE TENSION CONTINU**

VERFAHREN ZUR STEUERUNG EINER ENERGIEÜBERTRAGUNGSSTRECKE, WELCHE EINE HOCHSPANNUNGS-GLEICHSTROM-ÜBERTRAGUNGSLEITUNG UMFASST

METHOD FOR CONTROLLING A POWER TRANSMISSION LINK COMPRISING A HIGH VOLTAGE DIRECT CURRENT LINE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **13.03.2018 FR 1852136**
**13.04.2018 FR 1853273**

(43) Date de publication de la demande:
**23.12.2020 Bulletin 2020/52**

(73) Titulaires:
• **Supergrid Institute**
**69100 Villeurbanne (FR)**
• **Centre national de la recherche scientifique**
**75016 Paris (FR)**

(72) Inventeurs:
• **GONZALEZ, Juan Carlos**
**69007 Lyon (FR)**
• **COSTAN, Valentin**
**69007 Lyon (FR)**
• **DAMM, Gilney**
**69007 Lyon (FR)**
• **BENCHAIB, Abdelkrim**
**69007 Lyon (FR)**
• **LAMNABHI-LAGARRIGUE, Françoise**
**69007 Lyon (FR)**
• **LUSCAN, Bruno**
**69007 Lyon (FR)**

(74) Mandataire: **Opilex**
**32, rue Victor Lagrange**
**69007 Lyon (FR)**

(56) Documents cités:
**CN-A- 104 078 993     CN-B- 103 715 716**
**CN-B- 104 124 689     JP-A- S56 148 141**

• **NGAMROO I: "A stabilization of frequency oscillations using a power modulation control of HVDC link in a parallel AC-DC interconnected system", POWER CONVERSION CONFERENCE, 2002. PCC-OSAKA 2002. PROCEEDINGS OF THE OSAKA, JAPAN 2-5 APRIL 2002, PISCATAWAY, NJ, USA, IEEE, US, vol. 3, 2 avril 2002 (2002-04-02), pages 1405-1410, XP010590365, DOI: 10.1109/PCC.2002.998179 ISBN: 978-0-7803-7156-9**
• **ZHEN HUANG ET AL: "Study of AC/DC Power Coordinated Control for Multi-circuit UHVDC Transmissions of Sichuan", POWER AND ENERGY ENGINEERING CONFERENCE (APPEEC), 2010 ASIA-PACIFIC DATE OF CONFERENCE: 28-31 MARCH 2010, IEEE, PISCATAWAY, NJ, USA, 28 mars 2010 (2010-03-28), pages 1-4, XP031659373, ISBN: 978-1-4244-4812-8**

- **GIDDANI O A ET AL: "Grid integration of a large offshore wind farm using VSC-HVDC in parallel with an AC submarine cable", UNIVERSITIES POWER ENGINEERING CONFERENCE (UPEC), 2009 PROCEEDINGS OF THE 44TH INTERNATIONAL, IEEE, PISCATAWAY, NJ, USA, 1 septembre 2009 (2009-09-01), pages 1-5, XP031647547, ISBN: 978-1-4244-6823-2**

## Description

L'invention concerne les stratégies de commande de réseaux électriques, en particulier les stratégies de commande en vue d'assurer la stabilité de réseaux électriques incluant moins une ligne électrique alternative et une ligne électrique continue reliant des bus entre des zones de tension alternative.

Le document 'Inelfe, Europe's first integrated Onshore HVDC interconnection', publié par P. Labra Francos et al en 2012 par l'IEEE, décrit la mise en place et l'exploitation d'un lien haute tension incluant une ligne électrique alternative et une ligne électrique continu, connectées en parallèle entre la France et l'Espagne. La ligne électrique haute tension continu comporte un convertisseur alternatif/continu respectif à chacune de ses extrémités. Ces convertisseurs sont contrôlés en tension (désignés par le terme de convertisseurs VSC dans la littérature), ce qui permet de contrôler indépendamment la puissance active côté continu et la puissance réactive côté alternatif.

En fonctionnement normal, la ligne haute tension courant continu est commandée au moyen de ses convertisseurs, afin d'émuler le comportement d'une ligne de transmission alternative au moyen d'une réactance de ligne virtuelle. La puissance active de consigne transmise sur la ligne de transmission continue est alors fixée en fonction du déphasage entre les nœuds aux extrémités de cette ligne et en fonction des tensions sur ces nœuds.

Un dysfonctionnement aux bornes d'un tel lien se manifeste parfois par un déséquilibre transitoire de puissance, certaines génératrices accélérant et d'autres décélérant. On observe alors une évolution du déphasage entre les nœuds du réseau. Si le système ne peut pas revenir à l'équilibre à l'issue d'une perturbation, il peut devenir instable car les génératrices de puissance peuvent tourner de façon asynchrone et que l'échange de puissance ne peut pas alors plus être assuré.

En cas de dysfonctionnement détecté sur la ligne électrique alternative, la ligne de transmission continue est exploitée en conservant une réactance de ligne virtuelle fixe. En effet, le constructeur de la ligne devant garantir sa stabilité en cas de dysfonctionnement, d'importantes études de faisabilité doivent être réalisées sur la stabilité de la ligne durant un fonctionnement en transitoire. Le maintien de la réactance de ligne virtuelle fixe simplifie fortement une telle étude de stabilité.

Cependant, un tel système présente une stabilité encore réduite. La durée disponible pour supprimer un dysfonctionnement sur le réseau avant de provoquer une désynchronisation des nœuds aux extrémités de la ligne est ainsi encore trop réduite. Par ailleurs, un tel système ne permet pas d'imposer des nouvelles dynamiques aux zones de tension alternative de part et d'autre du lien de transmission.

Le document NGAMROO I: "A stabilization of frequency oscillations using a power modulation control of HVDC link in a parallel AC-DC interconnected system",POWER CONVERSION CONFERENCE, vol. 3, 2 avril 2002, illustre l'arrière-plan technologique.

L'invention vise à résoudre un ou plusieurs de ces inconvénients.

L'invention porte ainsi sur un procédé de commande d'un lien de transmission électrique entre des premier et deuxième bus de tension alternative connectés respectivement à des première et deuxième zones de tension alternative d'un réseau de transmission électrique, le lien de transmission comprenant une ligne haute tension continu, un premier convertisseur alternatif/continu connecté d'une part au premier bus et d'autre part à la ligne haute tension continu, un deuxième convertisseur alternatif/continu connecté d'une part au deuxième bus et d'autre part à la ligne haute tension continu, selon la revendication 1 annexée.

L'invention porte également sur les variantes des revendications dépendantes. L'homme du métier comprendra que chacune des caractéristiques des variantes de la description ou des revendications dépendantes peut être combinée indépendamment aux caractéristiques d'une revendication indépendante, sans pour autant constituer une généralisation intermédiaire.

D'autres caractéristiques et avantages de l'invention ressortiront clairement de la description qui en est faite ci-après, à titre indicatif et nullement limitatif, en référence aux dessins annexés, dans lesquels :

- la figure 1 est un schéma électrique d'un système incluant un lien haute tension susceptible de mettre en œuvre l'invention ;
- les figures 2 à 4 illustrent l'évolution de différents paramètres selon des simulations effectuées pour la mise en œuvre de l'invention, pour un cas de déconnexion de la ligne alternative ;
- les figures 5 à 7 illustrent différents paramètres en cas de déconnexion de la ligne alternative jusqu'à sa reconnexion, avec un exemple de mise en œuvre de l'invention ;
- les figures 8 à 10 illustrent l'évolution de différents paramètres selon des simulations effectuées pour la mise en œuvre de l'invention, pour un autre cas de défaut ;
- la figure 11 est un diagramme puissance-angle illustrant la mise en œuvre de l'invention lors d'une déconnexion de la ligne alternative.

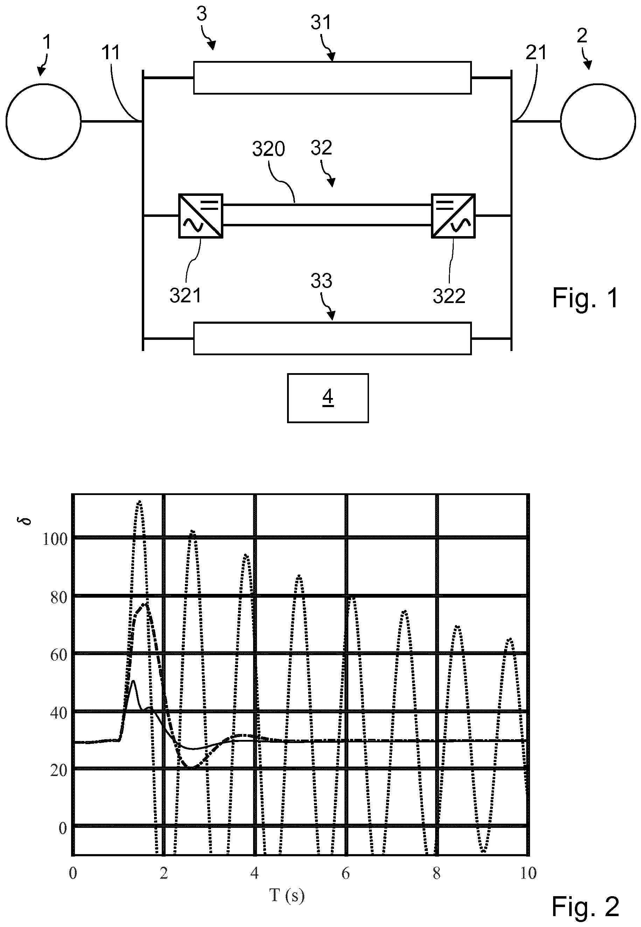

La figure 1 est un schéma électrique d'un système incluant un lien de transmission électrique 1 haute tension susceptible de mettre en œuvre l'invention. Par haute tension, on entend ici une tension au moins égale à 10kV en service sur le lien 3. Le système inclut ici le lien haute tension 3, une zone de courant alternatif haute tension 1 et une zone de courant alternatif haute tension 2. La zone 1 est connectée à un nœud ou bus courant alternatif (parfois désigné par le terme jeu de barres, pour bus bar en langue anglaise) 11 connecté à une extrémité du lien 3 et la zone 2 est connectée à un nœud ou bus courant alternatif 21 connecté à une autre extrémité du lien 3. Dans un souci de simplification, le système est ici représenté en assimilant la zone 1 à une machine équivalente, et en assimilant la zone 2 à un réseau de tension et fréquence constante (réseau « infini »), pour un cas particulier.

Le lien 3 inclut un lien haute tension continu 32 ici et optionnellement une ligne haute tension alternative 31, connectés en parallèle entre les bus 11 et 21. Plus précisément, le lien haute tension continu 32 comprend une ligne haute tension continu 320, un convertisseur alternatif/continu 321 connecté au bus 11 et à une première extrémité de la ligne 320, et un convertisseur alternatif/continu 322 connecté au bus 21 et à une deuxième extrémité de la ligne 320. Les convertisseurs 321 et 322 présentent avantageusement les mêmes caractéristiques électriques.

Le système inclut en outre un circuit de commande 4, configuré pour commander les convertisseurs 321 et 322. Les convertisseurs 321 et 322 sont avantageusement des convertisseurs à source de tension. De tels convertisseurs permettent de réguler de façon indépendante leur puissance active et leur puissance réactive. La boucle de gestion de la puissance active peut être fixée pour contrôler soit la puissance active injectée sur le réseau alternatif auquel le convertisseur est connecté, soit la tension continue sur la ligne 320 à laquelle il est connecté. La boucle de puissance réactive peut être fixée pour réguler soit la puissance réactive injectée ou absorbée au point de connexion au niveau d'un bus, soit la tension du réseau alternatif auquel le convertisseur est connecté.

Les convertisseurs 321 et 322 ont notamment les fonctions suivantes en régime établi (le régime établi correspondra par la suite à un fonctionnement en l'absence de défaut électrique du lien 3) : contrôler la tension sur la ligne 320, contrôler le flux bidirectionnel de puissance active sur la ligne 320, et contrôler la puissance réactive injectée ou absorbée au point de connexion. En régime établi, le circuit de commande 4 est par exemple configuré pour commander le convertisseur 322 en maître par contrôle du niveau de tension sur la ligne 320, le convertisseur 321 fonctionnant alors en esclave en contrôlant la puissance active transmise sur la ligne 320. Le convertisseur maître évacuera la puissance active contrôlée par l'esclave.

Par ses commandes, le circuit de commande 4 est avantageusement configuré pour émuler une admittance parallèle virtuelle 33, en parallèle de la ligne 31 et du lien 32.

Initialement, le circuit de commande 4 est configuré pour transmettre une commande de puissance active de consigne sur le premier ou le deuxième convertisseur, dont la valeur est récupérée. La puissance PdcO est transmise en régime établie par le lien 32. Les valeurs instantanées V1 et V2 des tensions sur les premier et deuxième bus sont récupérées.

Selon un premier aspect de l'invention, le circuit de commande 4 est configuré pour transmettre ensuite une puissance active de référence Pref (typiquement, Pref est la consigne de puissance appliquée au niveau du contrôle du convertisseur fonctionnant en mode esclave dans l'exemple cité précédemment) définie comme suit :

$$Pref = Pdc0 + \Delta Pdc$$

$\Delta Pdc$ est par exemple un terme inclus dans la puissance active transmise par l'intermédiaire de l'admittance parallèle virtuelle 33 durant une phase transitoire, par exemple pour imposer une nouvelle dynamique au réseau incluant les zones 1 et 2. La puissance de référence Pref doit être comprise entre Pmin et Pmax, où Pmin=-Pmax où Pmax est égale à la puissance nominale du convertisseur.

$\Delta Pdc$ peut se définir comme suit :

$$\Delta \mathrm{Pdc} = \Delta \mathrm{Pdc}_s + \Delta \mathrm{Pdc}_a$$

Avec $\Delta \mathrm{Pdc}_s$ un terme de synchronisation :

$$\Delta \mathrm{Pdc}_s = \lambda\delta * (\delta ref - \delta)$$

avec $\delta = \delta 1 - \delta 2$ le déphasage entre les tensions des premier et deuxième bus pour les valeurs instantanées récupérées, $\delta 1$ l'angle de la tension sur le premier bus, $\delta 2$ l'angle de la tension sur le deuxième bus, $\delta ref$ une valeur initiale de déphasage entre les tensions des premier et deuxième bus, $\lambda\delta$ un gain d'amplification ; avec $\Delta \mathrm{Pdc}_a$ un terme amortissant :

$$\Delta\text{Pdc}_a = \lambda\omega * (\omega1 - \omega2)$$

avec $\omega1$ la pulsation électrique de la zone 1, $\omega2$ la pulsation électrique de la zone 2, $\lambda\omega$ un gain d'amplification.

Avantageusement, le circuit de commande 4 est configuré pour transmettre une puissance active de référence Pref définie comme suit :
Pref=Pdc0+$\Delta$Pdc+$\Delta$Pdc$_d$, avec $\Delta$Pdc$_d$ un terme d'estimation de la perturbation.
APdc est avantageusement calculé de manière à synchroniser les et zones 1 et 2. APdc est avantageusement calculé de manière à amortir les oscillations de puissance du réseau de transmission.
En émulant l'admittance parallèle virtuelle 33 durant une phase transitoire, la puissance active de consigne peut être modifiée transitoirement d'un terme $\Delta$Pdc1.
$\Delta$Pdc1 peut se définir comme suit :

$$\Delta\text{Pdc1} = \frac{V1 * V2}{X33} * \sin\delta = Y33\,|V1||V2| * \sin\delta$$

Avec X33 la réactance de ligne émulée par le circuit de commande 4, Y33 l'admittance de ligne émulée par le circuit de commande 4 pour l'admittance 33.
Le circuit de commande 4 est par exemple configuré pour récupérer les informations suivantes, par exemple par l'intermédiaire de dispositifs de mesures au niveau des bus 11 et 21 :

- les valeurs instantanées V1 et V2 des tensions sur les premier et deuxième bus ;
- la valeur $\delta$ instantanée du déphasage entre les tensions des bus 11 et 21 ;
- la dernière valeur $\delta ref$ du déphasage entre les tensions des bus 11 et 21 en absence de dysfonctionnement sur le système (en l'absence de dysfonctionnement, $\delta = \delta ref$);
- la détection d'un dysfonctionnement sur le système ;
- la pulsation électrique $\omega$ sur chaque bus.

En cas de défaut électrique, de perturbation (par exemple court-circuit, changement de références de puissance mécanique des machines électriques, perte temporaire d'un pôle du lien 32) soit sur le lien de transmission 3, soit sur le bus 11, soit sur le bus 21, le circuit de commande 4 est configuré pour moduler automatiquement la puissance active de consigne du premier ou du deuxième convertisseur.
Le circuit de commande 4 peut être configuré pour communiquer avec les bus 11 et 21 pour récupérer les valeurs d'angles de phase, et les valeurs de tension sur ces bus. La pulsation d'un bus peut être déterminée soit en réalisant une moyenne des pulsations des machines connectées à ce bus, soit en mesurant la pulsation sur ce bus.
Par exemple suite à un défaut électrique, le circuit de commande 4 module la consigne de puissance active appliquée sur les convertisseurs 321 et 322. La variation de puissance active de consigne est notamment fixée :

- soit en fonction de l'évolution de l'écart de phase entre les tensions des bus 11 et 21. L'évolution de l'écart de phase peut par exemple être mesurée par la valeur ($\delta$- $\delta ref$), représentative de l'évolution de l'écart de phase après le défaut électrique. Une telle prise en compte de l'évolution de l'écart de phase permet de définir les fréquences d'oscillations entre les nœuds 11 et 21 ;
- soit en fonction de la pulsation électrique de la tension au niveau du bus 11, ici assimilé à une machine électrique. Une telle prise en compte de la pulsation sur le bus 11 permet de tenir compte de la variation de fréquence entre les bus 11 et 21, afin d'amortir les oscillations entre les deux zones 1 et 2 (conforme à la Figure 1) ;
- soit en fonction d'une perturbation Per d'une certaine amplitude. Une perturbation est une variation de puissance, par exemple une variation de puissance mécanique de la machine équivalente à la zone 1, soit une variation de charge dans cette zone.

La loi de commande de l'admittance de ligne Yv émulée par le circuit de commande 4 pour l'admittance 33 par exemple pour faire suite à un défaut électrique (ou une perturbation réseau), peut par exemple prendre la forme suivante pour le cas particulier présenté précédemment :

$$\Delta\text{Pdc} = \text{Pm} - \text{Pl} - \text{Pdc0} - \frac{V1*V2}{X31} * \sin\delta + \lambda_\delta * (\delta ref - \delta) + \lambda_\omega{}^* \Delta\omega$$

EP 3 753 085 B1

$$[Pm - Pl - Pdc0 - \frac{V1*V2}{X31} * \sin \delta \ ]$$

étant un premier terme qui permet de compenser rapidement les perturbations réseau comme par exemple une variation de charge à l'intérieur d'une zone ;

- $\lambda_\delta$* ($\delta ref$ - $\delta$) étant un deuxième terme qui permet de fournir une puissance de synchronisation en les deux zones et définir la fréquence des oscillations inter-zones ;
- $\lambda_\omega$* $\Delta\omega$ étant un troisième terme qui permet de fournir une puissance d'amortissement en fonction de $\Delta\omega$ et contrôler l'amortissement des oscillations inter-zones.

La loi de commande contient deux termes activés en permanence qui sont les termes permettant de fournir la puissance d'amortissement et la puissance de synchronisation respectivement. Le terme de compensation des perturbations réseau est un terme facultatif, il peut être activé en permanence basé sur des mesures en temps réel, ou il peut être activé suite à un procédé d'identification d'une perturbation.

On peut prévoir que la loi de commande ne prenne en compte qu'un ou plusieurs des premier à troisième termes selon un premier aspect de l'invention.

La loi de commande du circuit de commande 4 permet ainsi d'accroître la stabilité du système lors de l'apparition d'un défaut électrique ou d'une perturbation, en modifiant dynamiquement l'admittance de ligne émulée lors d'un tel défaut électrique. La loi de commande permet notamment de réduire l'augmentation de l'énergie cinétique de la (ou des) génératrice durant un défaut, et augmente l'énergie de décélération disponible pour la génératrice après la suppression du défaut. Cela se traduit en une augmentation de la marge de stabilité transitoire. La loi de commande permet de maitriser les éventuelles oscillations électromécaniques de la génératrice intervenant après la suppression du défaut.

Avantageusement, le circuit de commande 4 peut commander les convertisseurs 321 et 322, de façon à amortir transitoirement les oscillations en cas de détection de dysfonctionnement.

Le lien 32 présente une dynamique très élevée par rapport au réseau alternatif. Par ailleurs le lien 32 muni des convertisseurs 321 et 322 permet de réaliser un contrôle indépendant des puissances active et réactive transmises sur la ligne 320. Chaque convertisseur 321 et 322 peut donc se comporter comme l'équivalent d'une source de courant avec un contrôle indépendant des puissances active et réactive par rapport au réseau alternatif. En supposant que les pertes sont négligeables sur la ligne 320, on peut utiliser le modèle d'injection, selon lequel une puissance active injectée sur la ligne 320 par le convertisseur 321 est égale à une puissance active prélevée par le convertisseur 322 sur cette ligne 320.

On peut alors en déduire l'équation suivante en régime établi :

$$M\frac{d\delta^2}{d^2t} + D\frac{d\delta}{dt} = Pm - Pl - Pdc0 - Pac$$

Avec M l'inertie équivalente du système, D l'amortissement équivalent du système, Pm la puissance mécanique appliquée sur la machine équivalente assimilée à la zone 1, Pl la puissance électrique prélevée par une charge équivalente de la zone 1 sur la Figure 1, Pdc0 la puissance active transmise initialement par le lien 32 en régime établi, et Pac la puissance active transmise initialement par la ligne 31 en régime établi.

Si le circuit de commande 4 commande la transmission d'une puissance active $\Delta$Pdc par l'intermédiaire de l'admittance parallèle virtuelle 13, la relation précédente devient l'équation dynamique suivante :

$$M\frac{d\delta^2}{d^2t} + D\frac{d\delta}{dt} = Pm - Pl - Pdc0 - Pac - \frac{V1 * V2}{X33}sin\delta$$

X31 correspond à la réactance de la ligne 31, X33 correspondant à la réactance de la ligne virtuelle 33.

L'équation dynamique peut être reformulée comme suit :

$$\begin{cases} \dfrac{d\delta}{dt} = \Delta\omega \\ M\dfrac{d\Delta\omega}{dt} + D\dfrac{d\delta}{dt} = Pm - Pl - Pdc0 - \dfrac{V1*V2}{X31}sin\delta - Yv*V1*V2*sin\delta \end{cases}$$

Le paramètre de commande correspond à la valeur de puissance traversant l'admittance virtuelle 33. Pour contrôler le système par l'intermédiaire de la valeur d'admittance virtuelle, on peut par exemple utiliser une technique de rétroaction par linéarisation peut être adoptée : le but est de transformer la dynamique du système non linéaire un système au partiellement linéaire, par l'intermédiaire d'une rétroaction. La puissance traversant l'admittance virtuelle 33 peut être formulée comme suit :

$$Yv\,|V1||V2|*sin\delta = Pm - Pl - Pdc0 - \frac{V1*V2}{X31}sin\delta + M*K\delta*(\delta ref - \delta) + (M*K\omega - D)*\Delta\omega$$

$K\delta$ et $K\omega$ étant des gains, rendant le système assimilable à un système oscillant amorti. En combinant cette équation avec l'équation dynamique précédente, la dynamique du système en boucle fermée peut se définir comme suit :

$$\begin{cases} \dfrac{d\delta}{dt} = \Delta\omega \\ \dfrac{d\Delta\omega}{dt} = -\lambda_\delta(\delta ref - \delta) - \lambda_\omega\Delta\omega \end{cases}$$

On obtient ainsi un système linéaire.

En réalisant le changement de variable x1=($\delta$ref-$\delta$) et x2=$\Delta\omega$, on peut formuler le système comme suit :

$$\begin{bmatrix} \dot{x1} \\ \dot{x2} \end{bmatrix} = \begin{bmatrix} 0 & 1 \\ -K\delta & -K\omega \end{bmatrix}\begin{bmatrix} x1 \\ x2 \end{bmatrix}$$

La dynamique du système en boucle fermée peut ainsi être choisie en sélectionnant les valeurs $K\delta$ et $K\omega$. Le polynôme caractéristique de cette matrice d'état peut être identifié par un système du second ordre :

$$s^2 + K\omega{}^*s + K\delta = \lambda^2 + 2^*\xi^*\omega n^*\lambda + \omega n^2$$

On peut alors calculer les gains $K\delta$ et $K\omega$ pour définir la fréquence naturelle souhaitée wn et le coefficient d'amortissement souhaité pour le système :

$$\begin{cases} K\delta = \omega n^2 \\ K\omega = 2\xi*\omega n \end{cases}$$

Avantageusement, $\omega$n est une fréquence comprise entre 0,3 et 0,7 Hz, de préférence entre 0,4 et 0,6Hz. Avantageusement, $\xi$ est un facteur d'amortissement compris entre 0,4 et 0,8, de préférence compris entre 0,5 et 0,7.

Ces calculs ont été basés sur l'hypothèse que le bus 21 est connecté à un réseau infini. En effectuant des calculs similaires pour le cas où la zone 2 correspond à une machine équivalente, on peut aisément démontrer que les gains peuvent être définis de façon identique au cas précédent.

Pour un cas plus générique, la puissance active de consigne du premier ou du deuxième convertisseur est modifiée transitoirement d'un terme incluant un terme $\Delta Pdc_d$, de façon à imposer de nouvelles dynamiques aux première et deuxième zones, avec :

$$\Delta \text{Pdc}_d = \text{Pdc0} + V1 * V2 \sin \delta / \text{X31} - (M1 * M2)/(M1 + M2) * (((Pm1 - Pl1 - D1 * d\delta1/dt)/M1) - ((Pm2 - Pl2 - D2 * d\delta2/dt)/M2)$$

Avec M1 et D1 l'inertie et l'amortissement électriques d'une machine électrique équivalente à la zone 1, M2 et D2 l'inertie et l'amortissement électriques d'une machine électrique équivalente à la zone 2, $\lambda\delta$ et $\lambda\omega$ les gains d'amplification définis auparavant, Pm1 la puissance mécanique de la machine électrique équivalente à la zone 1, Pl1 une charge électrique équivalente à la zone 1, Pm2 la puissance mécanique de la machine électrique équivalente à la zone 2, Pl2 une charge électrique équivalente à la zone 2.

La puissance active de consigne du premier ou du deuxième convertisseur peut également être modifiée transitoirement d'un terme incluant un terme APdc1, avec :

$$\Delta \text{Pdc1} = Y33 \, |V1||V2| * \sin \delta$$

Y33 étant modifié en fonction des valeurs V1 et V2, en fonction de l'évolution de l'écart de phase $\delta$, en fonction des écarts de pulsation entre les tensions des premier et deuxième bus, ou en fonction d'une amplitude de perturbation.

Les diagrammes des figures 2 à 4 illustrent l'évolution de différents paramètres selon des simulations effectuées pour la mise en œuvre de l'invention, pour un premier cas de défaut.

Les hypothèses suivantes ont été prises en compte :

- une génératrice recevant une puissance mécanique de 500MW, et une charge électrique de 100MW connectées au bus 11. La génératrice connectée au bus 11 présente une inertie de 3,5s ;
- une génératrice recevant une puissance mécanique de 100MW, et une charge électrique de 500MW connectées au bus 21. La génératrice connectée au bus 21 présente une inertie de 3s ;

En régime établi, la puissance transmise entre les bus 11 et 21 est répartie à 200MW pour la ligne 31, et 200MW pour le lien 32. On prendra comme hypothèse un déphasage de 30° entre les tensions des bus 11 et 21 en régime établi, et une ligne 320 d'une longueur de 200km.

Pour la mise en œuvre de l'invention, on a choisi des valeurs de fréquence naturelle $\omega$n de 0,5Hz et de facteur d'amortissement $\xi$ de 0,6.

Le défaut électrique étudié ici est un défaut triphasique sur la ligne 31, d'une durée de 300ms. Ce défaut intervient à l'instant t=1s sur les diagrammes. Les courbes en pointillés correspondent à un lien selon l'état de la technique, sans gestion dynamique d'une admittance virtuelle 33 après le défaut électrique, avec maintien de la puissance active sur la ligne 320 à une même valeur de consigne qu'avant le défaut. Les courbes en tiret-point correspondent à une mise en œuvre de l'invention avec une gestion de l'admittance virtuelle 33 en limitant la puissance sur la ligne 320 à 300MVA. Les courbes en trait continu correspondent à une mise en œuvre de l'invention avec une gestion de l'admittance virtuelle 33 en limitant la puissance sur la ligne 320 à 600MVA.

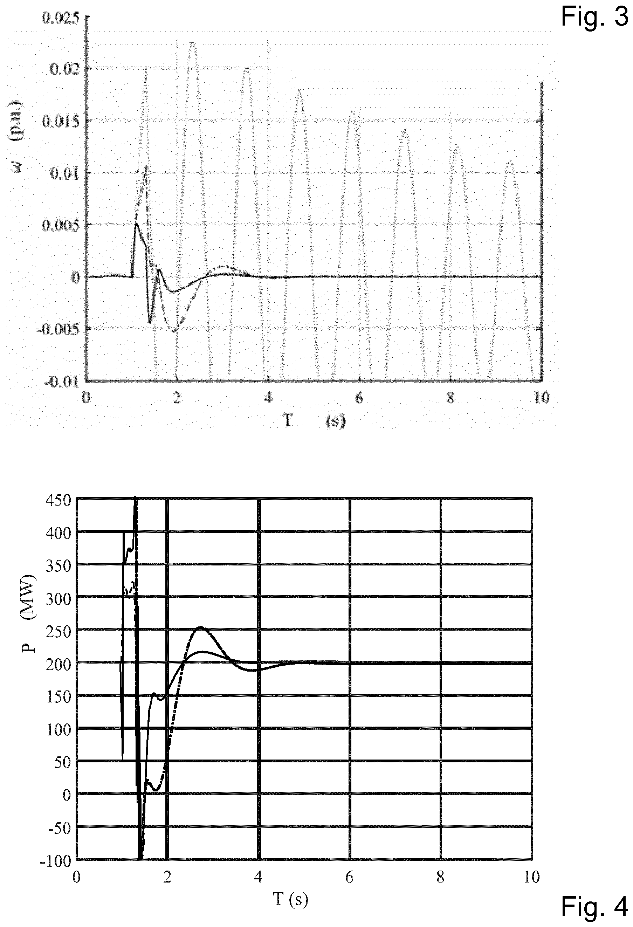

Le diagramme de la figure 2 illustre le déphasage (en °) entre les tensions des bus 11 et 21. Le diagramme de la figure 3 illustre la différence de pulsation (par unité) entre les bus 11 et 21 du réseau. Le diagramme de la figure 4 illustre la puissance active transmise sur la ligne 320.

On constate qu'en l'absence d'admittance virtuelle dynamique lors d'un défaut électrique, en maintenant juste une puissance active constante sur la liaison 320, le déphasage entre les bus 11 et 21 atteint une amplitude très élevée et présente d'importantes oscillations postérieurement à la suppression du défaut, aboutissant à une désynchronisation entre les bus 11 et 21. La différence de pulsation entre les bus 11 et 21 est également très élevée dans cette configuration, cette différence de pulsation présentant également des oscillations mal amorties après la suppression du défaut électrique.

Même en limitant la puissance active sur la ligne 320 à 300MVA, l'amplitude du déphasage entre les tensions des bus 11 et 21 et l'amplitude de la différence de pulsation entre les bus 11 et 21 sont fortement réduites. On constate que même en limitant la puissance active, la dynamique du réseau a été modifiée. Les oscillations du déphasage et de la différence de pulsation sont par ailleurs très rapidement amorties, même postérieurement à la suppression du défaut. La puissance active sur la ligne 31 est par ailleurs limitée à 450MW lors du défaut électrique.

En limitant la puissance active sur la ligne 320 à 600MVA, l'amplitude du déphasage entre les tensions des bus 11 et 21 et l'amplitude de la différence de pulsation entre les bus 11 et 21 sont encore plus fortement réduites. Les oscillations du déphasage et de la différence de pulsation sont amorties encore plus rapidement, même postérieurement à la suppression du défaut. La puissance active sur la ligne 31 est par ailleurs limitée à 350MW lors du défaut électrique.

On constate qu'avec la mise en œuvre de l'invention pour un tel défaut, la ligne 320 permet d'assurer le synchronisme entre les zones 1 et 2, malgré la coupure sur la ligne 31.

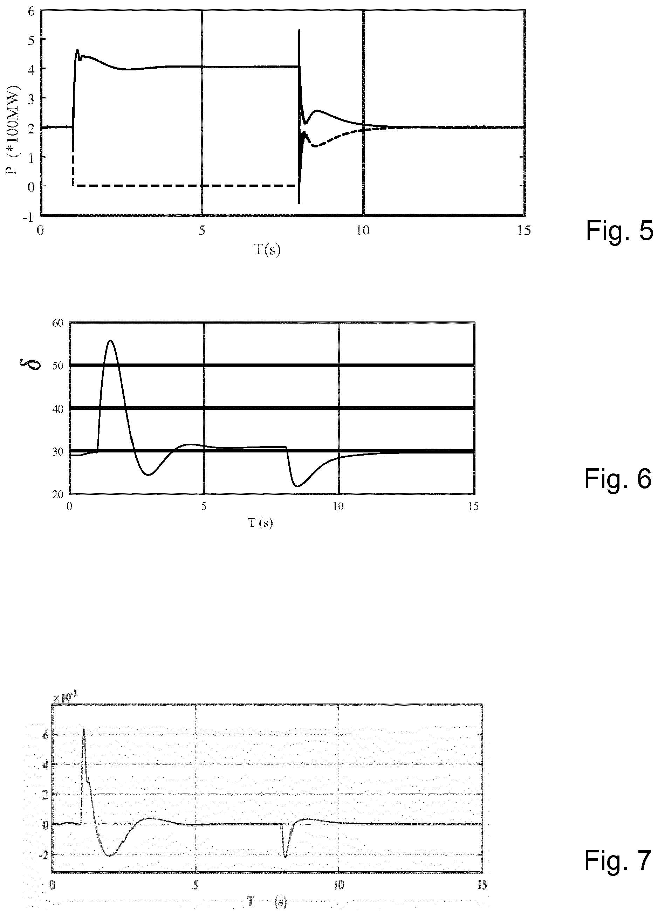

Le maintien de la stabilité et du déphasage est mieux illustré par l'intermédiaire des diagrammes des figures 5 à 7, correspondant à la mise en œuvre de l'invention avec une limitation de puissance active à 600MVA sur la ligne 320. La ligne 31 est déconnectée très rapidement à t=1s, puis reconnectée à t=8s.

La figure 5 illustre la puissance active sur la ligne 320 en trait continu et la ligne en trait discontinu représente la puissance active sur la ligne 31. La figure 6 illustre la différence de phase (en °) entre les tensions des bus 11 et 21 sur le même intervalle de temps. La figure 7 illustre la différence de pulsation électrique (par unité) entre les bus 11 et 21 sur le même intervalle de temps.

Le diagramme de la figure 6 illustre qu'assez rapidement après le défaut électrique, le déphasage entre les tensions des bus 11 et 21 se stabilise à une valeur assez proche de celle précédant le défaut, malgré la déconnexion de la ligne 31. Le diagramme de la figure 7 illustre qu'assez rapidement après le défaut électrique, la différence de pulsation entre les bus 11 et 21 converge vers 0, malgré la déconnexion de la ligne 31. Les deux zones 1 et 2 restent donc synchrones malgré la déconnexion de la ligne 31.

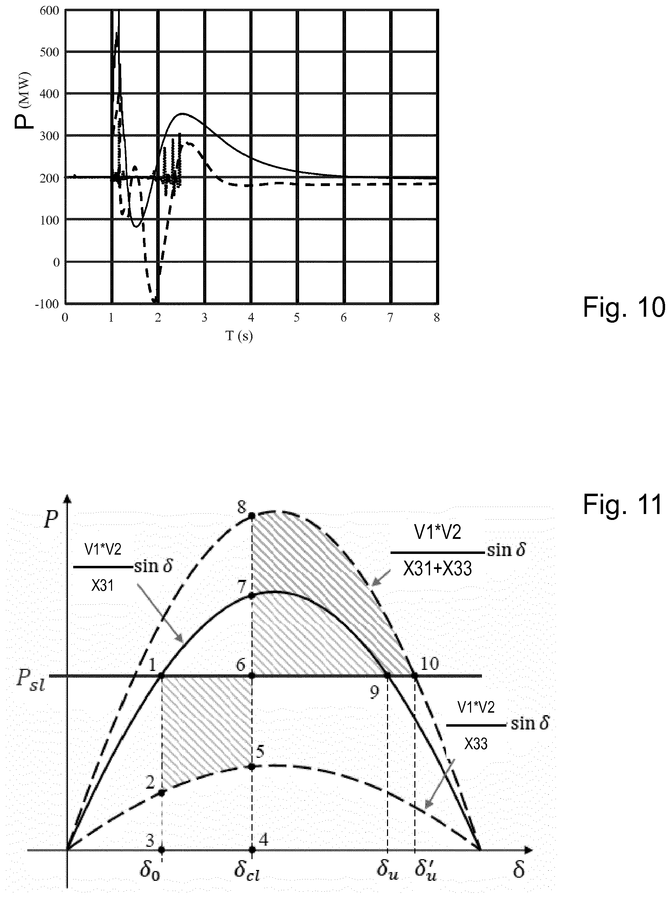

La figure 11 est un diagramme puissance-angle illustrant la mise en œuvre de l'invention lors du premier cas de dysfonctionnement. X31 correspond à la réactance de la ligne 31, X33 correspondant à la réactance de la ligne virtuelle 33. Au point 1, le système est initialement à l'équilibre, avec un déphasage $\delta 0$ entre les zones 1 et 2. Lors de l'apparition du défaut électrique, la puissance transmise sur la ligne 31 devient nulle. A la détection du défaut électrique, l'admittance virtuelle 33 est activée, de façon à transmettre davantage de puissance sur la ligne 320. Ainsi, on passe au point 2 du diagramme, en conservant le déphasage $\delta 0$. Le rotor de la génératrice assimilée à la zone 1 voit sa vitesse augmenter jusqu'à atteindre un angle de déphasage $\delta cl$ au point 5. L'énergie cinétique acquise par le rotor est cependant limitée, du fait de la puissance électrique transmise par l'admittance virtuelle 33, ce qui accroît la stabilité du système.

Le défaut électrique est alors supprimé. Avec la puissance à nouveau fournie par la ligne 31, on passe alors au point 8 sur le diagramme, correspondant au cumul d'une puissance sur la ligne 31 et par l'admittance virtuelle 33. A partir du point 8, le rotor correspondant à la génératrice de la zone 1 ralentit, avec une augmentation de l'angle de déphasage entre les zones 1 et 2.

Le point 10 correspond à la limite de déphasage garantissant la stabilité du système. On constate que l'angle limite de déphasage $\delta u'$ est supérieur à l'angle de déphasage limite $\delta u$ (point 9 du diagramme) en l'absence de mise en œuvre de l'invention.

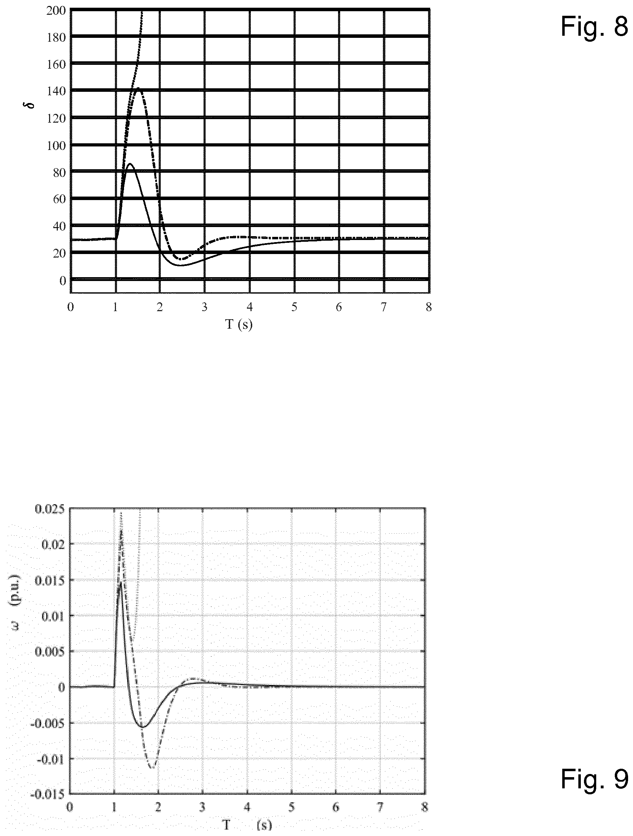

Les diagrammes des figures 8 à 10 illustrent l'évolution de différents paramètres selon des simulations effectuées pour la mise en œuvre de l'invention, pour un deuxième cas de défaut.

Les hypothèses sont identiques à celles du premier défaut. Le défaut électrique est ici un court-circuit au niveau de la zone 2, induisant une multiplication de la charge électrique d'un facteur 3 pendant une durée de 150ms.

Ce défaut intervient à l'instant t=1s sur les diagrammes. Les courbes en pointillés correspondent à un lien selon l'état de la technique, sans gestion dynamique d'une admittance virtuelle 33 après le défaut électrique, avec maintien de la puissance active sur la ligne 320 à une même valeur de consigne qu'avant le défaut. Les courbes en tiret-point correspondent à une mise en œuvre de l'invention avec une gestion de l'admittance virtuelle 33 en limitant la puissance sur la ligne 320 à 300MVA. Les courbes en trait continu correspondent à une mise en œuvre de l'invention avec une gestion de l'admittance virtuelle 33 en limitant la puissance sur la ligne 320 à 600MVA.

Le diagramme de la figure 8 illustre le déphasage (en °) entre les tensions des bus 11 et 21. Le diagramme de la figure 9 illustre la différence de pulsation (par unité) entre les bus 11 et 21 du réseau. Le diagramme de la figure 10 illustre la puissance active transmise sur la ligne 320.

On constate qu'en l'absence d'admittance virtuelle dynamique lors d'un défaut électrique, en maintenant juste une puissance active constante sur la liaison 320, le déphasage entre les tenions des bus 11 et 21 augmente très rapidement et n'est pas limité. La différence de pulsation entre les bus 11 et 21 augmente également rapidement et sans limitation. On aboutit ainsi à une désynchronisation entre les zones 1 et 2.

Même en limitant la puissance active sur la ligne 320 à 300MVA, l'amplitude du déphasage entre les tensions des bus 11 et 21 et l'amplitude de la différence de pulsation entre les bus 11 et 21 sont limitées. Des oscillations du déphasage et de la différence de pulsation sont par ailleurs très rapidement amorties.

En limitant la puissance active sur la ligne 320 à 600MVA, l'amplitude du déphasage entre les tensions des bus 11 et 21 et l'amplitude de la différence de pulsation entre les bus 11 et 21 sont encore plus fortement réduites. Les oscillations du déphasage et de la différence de pulsation sont amorties encore plus rapidement.

Pour un tel type de défaut, la mise en œuvre de l'invention permet de bénéficier d'une réserve de puissance pour éviter un décrochage du réseau en cas de défaut.

**Revendications**

**1.** Procédé de commande d'un lien de transmission électrique (3) entre des premier et deuxième bus de tension alternative (11, 21) connectés respectivement à des première et deuxième zones de tension alternative d'un réseau de transmission électrique, le lien de transmission comprenant une ligne haute tension continu (320), un premier convertisseur alternatif/continu (321) connecté d'une part au premier bus (11) et d'autre part à la ligne haute tension continu (320), un deuxième convertisseur alternatif/continu (322) connecté d'une part au deuxième bus (21) et d'autre part à la ligne haute tension continu, le procédé comprenant :

- la récupération d'une valeur de puissance active de consigne appliquée (Pdc0) sur le premier ou sur le deuxième convertisseur (321, 322) ;
- la récupération des valeurs instantanées V1 et V2 des tensions sur les premier et deuxième bus respectivement ;
- dans lequel la puissance active de consigne du premier ou du deuxième convertisseur est modifiée d'une valeur incluant un terme ΔPdc, de façon à imposer de nouvelles dynamiques au réseau incluant les première et deuxième zones, avec:

$$\Delta \mathrm{Pdc} = \Delta \mathrm{Pdc}_s + \Delta \mathrm{Pdc}_a$$

Avec $\Delta \mathrm{Pdc}_s$ un terme de synchronisation :

$$\Delta \mathrm{Pdc}_s = \lambda \delta * (\delta ref - \delta)$$

avec $\delta = \delta 1 - \delta 2$ le déphasage entre les tensions des premier et deuxième bus pour les valeurs instantanées récupérées, $\delta 1$ l'angle de la tension sur le premier bus, $\delta 2$ l'angle de la tension sur le deuxième bus, $\delta ref$ une valeur initiale de déphasage entre les tensions des premier et deuxième bus, $\lambda \delta$ un gain d'amplification ; avec $\Delta \mathrm{Pdc}_a$ un terme amortissant :

$$\Delta \mathrm{Pdc}_a = \lambda \omega * (\omega 1 - \omega 2)$$

avec $\omega 1$ la pulsation électrique de la zone 1, $\omega 2$ la pulsation électrique de la zone 2, $\lambda \omega$ un gain d'amplification.

**2.** Procédé de commande selon l'une quelconque des revendications précédentes, dans lequel la puissance active de consigne du premier ou du deuxième convertisseur est modifiée d'une valeur incluant un terme $\Delta \mathrm{Pdc}_d$ d'estimation d'une perturbation.

**3.** Procédé de commande selon la revendication 2, dans lequel $\lambda \delta = K\delta$ et $\lambda \omega = K\omega$, avec $K\delta = \omega n^2$ et $K\omega = 2*\xi*\omega n$, avec $\omega n$ une fréquence comprise entre 0,3 et 0,7 Hz et $\xi$ un facteur d'amortissement compris entre 0,4 et 0,8.

**4.** Procédé de commande selon la revendication 2 ou 3, dans lequel le terme d'estimation de la perturbation $\Delta \mathrm{Pdc}_d$ est calculé comme suit :

$$\Delta \mathrm{Pdc}_d = \mathrm{Pdc}0 + V1 * V2 \sin \delta / X31 - (M1 * M2)/(M1 + M2) * (((Pm1 - Pl1 - D1 * d\delta1/dt)/M1) - ((Pm2 - Pl2 - D2 * d\delta2/dt)/M2).$$

Avec M1 et D1 l'inertie et l'amortissement électriques d'une machine électrique équivalente à la première zone, M2 et D2 l'inertie et l'amortissement électriques d'une machine électrique équivalente à la deuxième zone, Pm1 la puissance mécanique de la machine électrique équivalente à la première zone, Pl1 une charge électrique équivalente à la première zone, Pm2 la puissance mécanique de la machine électrique équivalente à la deuxième zone, Pl2 une charge électrique équivalente à la deuxième zone, X31 la réactance de la ligne haute tension alternative, avec PdcO la valeur de puissance active de consigne appliquée récupérée.

**5.** Procédé de commande selon l'une quelconque des revendications précédentes, dans lequel le premier ou le deuxième convertisseur alternatif/continu est commandé de façon à émuler une admittance virtuelle dynamique Y33 en modifiant transitoirement sa valeur de puissance active de consigne d'une valeur incluant un terme ΔPdc1, avec :

$$\Delta \mathrm{Pdc}1 = Y33 \, |V1||V2| * \sin \delta$$

Y33 étant modifié en fonction des valeurs V1 et V2, en fonction de l'évolution de l'écart de phase $\delta$, en fonction des écarts de pulsation entre les tensions du premier et deuxième bus, ou en fonction d'une amplitude de perturbation.

6. Procédé de commande selon l'une quelconque des revendications précédentes, dans lequel lesdits premier et deuxième convertisseurs (321, 322) sont des convertisseurs à source de tension.

7. Procédé de commande selon l'une quelconque des revendications précédentes, dans lequel le lien de transmission comprend une ou plusieurs lignes haute tension alternative (31).

**Patentansprüche**

1. Verfahren zur Steuerung einer elektrischen Übertragungsverbindung (3) zwischen einem ersten und einem zweiten Wechselspannungsbus (11, 21), die jeweils mit dem ersten und zweiten Wechselspannungsbereich eines elektrischen Übertragungsnetzes verbunden sind, wobei die Übertragungsverbindung eine Gleichstrom-Hochspannungsleitung (320) umfasst, einen ersten Gleichstrom/Wechselstrom-Wandler (321), der zum einen an den ersten Bus (11) und zum andern an die Gleichstrom-Hochspannungsleitung (320) angeschlossen ist, und einen zweiten Gleichstrom/Wechselstrom-Wandler (322), der zum einen an den zweiten Bus (21) und zum andern an die Gleichstrom-Hochspannungsleitung angeschlossen ist, wobei das Verfahren folgendes umfasst:

- die Ermittlung eines dem ersten oder zweiten Wandler (321, 322) zugeführten Wirkleistungssollwerts (PdcO):
- die Ermittlung der Istwerte V1 und V2 der Spannungen jeweils am ersten bzw. zweiten Bus;
- in dem der Wirkleistungssollwert des ersten oder zweiten Wandlers um einen Wert geändert wird, der einen Term APdc enthält, so dass dem Netz mit dem ersten und zweiten Bereich neue Dynamiken auferlegt werden, wobei:

$$\Delta Pdc = \Delta Pdc_s + \Delta pdc_a$$

Dabei ist $APdc_s$ ein Synchronisationsterm

$$\Delta Pdc_s = \lambda\delta * (\delta ref - \delta),$$

wobei $\delta = \delta 1 - \delta 2$ die Phasenverschiebung zwischen den Spannungen des ersten und zweiten Busses für die ermittelten Istwerte ist, $\delta 1$ der Winkel der Spannung auf dem ersten Bus, $\delta 2$ der Winkel der Spannung auf dem zweiten Bus, $\delta ref$ ein Anfangswert der Phasenverschiebung zwischen den Spannungen des ersten und zweiten Busses und $\lambda\delta$ ein Verstärkungsfaktor ist; dabei ist $\Delta Pdc_a$ ein Dämpfungswert:

$$\Delta Pdc_a = \lambda\omega * (\omega 1 - \omega 2),$$

$\omega 1$ die elektrische Pulsation von Bereich 1, $\omega 2$ die elektrische Pulsation von Bereich 2, und $\lambda\omega$ eine Verstärkung.

2. Steuerungsverfahren nach einem der vorhergehenden Ansprüche, wobei der Wirkleistungssollwert des ersten oder zweiten Wandlers um einen Wert geändert wird, der einen Term $\Delta Pdc_d$ enthält, zum Schätzen einer Störung.

3. Steuerungsverfahren nach Anspruch 2, in dem $\lambda\delta = K\delta$ und $\lambda\omega = K\omega$, wobei $K\delta = \omega n^2$ und $K\omega = 2*\xi* \omega n,$ mit einer Frequenz $\omega n$ zwischen 0,3 und 0,7 Hz und einem Dämpfungsfaktor $\xi$ zwischen 0,4 und 0,8.

4. Steuerungsverfahren nach Anspruch 2 oder 3, in dem der Term der Störungsschätzung $\Delta Pdc_d$ wie folgt berechnet wird:

$$\Delta Pdc_d = Pdc0 + V1 * V2 \sin \delta /X31 - (M1 * M2)/(M1 + M2) (((Pm1 - Pl1 -$$

$$D1 * d\delta 1/dt)/M1) - ((Pm2 - Pl2 - D2 * d\delta 2/dt)/M2).$$

M1 und D1 sind die elektrische Trägheit bzw. elektrische Dämpfung einer elektrischen Maschine, die dem ersten Bereich entspricht, M2 und D2 die elektrische Trägheit und Dämpfung einer elektrischen Maschine, die dem zweiten Bereich entspricht, Pm1 ist die mechanische Leistung der elektrischen Maschine, die dem ersten Bereich entspricht, Pl1 eine elektrische Last, die dem ersten Bereich entspricht, Pm2 eine mechanische Leitung der elektrischen Maschine, die dem zweiten Bereich entspricht, P12 eine elektrische Last, die dem zweiten Bereich entspricht, und X31 die Reaktanz der Wechselstrom-Hochspannungsleitung, wobei PdcO der ermittelte Sollwert der zugeführten Wirkleistung ist.

5. Steuerungsverfahren nach einem der vorhergehenden Ansprüche, in dem der erste oder zweite Gleichstrom/Wechselstrom-Wandler so gesteuert wird, dass eine dynamische virtuelle Admittanz Y33 emuliert wird, indem sein Wirkleistungssollwert vorübergehend um einen Wert geändert wird, der einen Term ΔPdc1 enthält, wobei:

$$\Delta\mathrm{Pdc1} = \mathrm{Y33}\ |\mathrm{V1}||\mathrm{V2}| * \sin \delta$$

Y33 wird entsprechend der Werte V1 und V2, entsprechend der Entwicklung der Phasenabweichung $\delta$, entsprechend der Pulsationsabweichungen zwischen den Spannungen des ersten und des zweiten Busses oder entsprechend einer Störungsamplitude geändert.

6. Steuerungsverfahren nach einem der vorhergehenden Ansprüche, in dem der erste und der zweite Wandler (321, 322) Spannungsquellenwandler sind.

7. Steuerungsverfahren nach einem der vorhergehenden Ansprüche, in dem die Übertragungsverbindung eine oder mehrere Wechselstrom-Hochspannungsleitungen (31) umfasst.

**Claims**

1. A method for controlling an electrical transmission link (3) between first and second AC voltage buses (11, 21) connected respectively to first and second AC voltage areas of an electrical transmission grid, the transmission link comprising a high-voltage DC line (320), a first AC/DC converter (321) connected firstly to the first bus (11) and secondly to the high-voltage DC line (320), and a second AC/DC converter (322) connected firstly to the second bus (21) and secondly to the high-voltage DC line, the method comprising:

   - retrieving a setpoint active power value (Pdc0) applied to the first or to the second converter (321, 322);
   - retrieving the instantaneous values V1 and V2 of the voltages on the first and second buses, respectively;
   - wherein the setpoint active power of the first or of the second converter is modified by a value including a term ΔPdc, so as to impose new dynamics on the grid including the first and second areas, where:

$$\Delta\mathrm{Pdc} = \Delta\mathrm{Pdc}_\mathrm{s} + \Delta\mathrm{Pdc}_\mathrm{a}$$

Where $\Delta\mathrm{Pdc}_\mathrm{s}$ is a synchronization term:

$$\Delta\mathrm{Pdc}_\mathrm{s} = \lambda\delta * (\delta ref - \delta)$$

where $\delta = \delta1 - \delta2$ is the phase offset between the voltages of the first and second buses for the retrieved instantaneous values, $\delta1$ is the angle of the voltage on the first bus, $\delta2$ is the angle of the voltage on the second bus, $\delta ref$ is an initial phase offset value between the voltages of the first and second buses, $\lambda\delta$ is an amplification gain;
where $\Delta\mathrm{Pdc}_\mathrm{a}$ is a damping term:

$$\Delta\mathrm{Pdc}_\mathrm{a} = \lambda\omega * (\omega1 - \omega2)$$

where $\omega1$ is the electrical angular frequency of the area 1, $\omega2$ is the electrical angular frequency of the area 2, $\lambda\omega$ is an amplification gain.

2. The control method as claimed in any one of the preceding claims, wherein the setpoint active power of the first or of the second converter is modified by a value including a term $\Delta Pdc_d$ for estimating disturbance.

3. The control method as claimed in claim 2, wherein $\lambda\delta = K\delta$ et $\lambda\omega = K\omega$, where $K\delta = \omega n^2$ and $K\omega = 2^*\xi^*\omega n$, where $\omega n$ is a frequency between 0.3 and 0.7 Hz and $\xi$ is a damping factor between 0.4 and 0.8.

4. The control method as claimed in claim 2 or 3, wherein the term for estimating the disturbance $\Delta Pdc_d$ is calculated as follows:

$$\Delta Pdc_d = Pdc0 + V1 * V2 \sin\delta \, / X31 - (M1 * M2)/(M1 + M2) * (((Pm1 - Pl1 - D1 * d\delta1/dt)/M1) - ((Pm2 - Pl2 - D2 * d\delta2/dt)/M2).$$

Where M1 and D1 are the electrical inertia and damping of an electrical machine equivalent to the first area, M2 and D2 are the electrical inertia and damping of an electrical machine equivalent to the second area, Pm1 is the mechanical power of the electrical machine equivalent to the first area, Pl1 is an electrical load equivalent to the first area, Pm2 is the mechanical power of the electrical machine equivalent to the second area, Pl2 is an electrical load equivalent to the second area, X31 is the reactance of the high-voltage AC line, where PdcO is the retrieved applied setpoint active power value.

5. The control method as claimed in any one of the preceding claims, wherein the first or the second AC/DC converter is controlled so as to emulate a dynamic virtual admittance Y33 by transiently modifying its setpoint active power value by a value including a term $\Delta Pdc1$, where:

$$\Delta Pdc1 = Y33 \, |V1||V2| * \sin\delta$$

Y33 being modified on the basis of the values V1 and V2, on the basis of the evolution of the phase difference $\delta$, on the basis of the angular frequency differences between the voltages of the first and second buses, or on the basis of a disturbance amplitude.

6. The control method as claimed in any one of the preceding claims, wherein said first and second converters (321, 322) are voltage-source converters.

7. The control method as claimed in any one of the preceding claims, wherein the transmission link comprises one or more high-voltage AC lines (31).

Fig. 1

Fig. 2

Fig. 3

Fig. 4

Fig. 5

Fig. 6

Fig. 7

Fig. 8

Fig. 9

Fig. 10

Fig. 11

**EP 3 753 085 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Littérature non-brevet citée dans la description

- **P. LABRA FRANCOS et al.** Inelfe, Europe's first integrated Onshore HVDC interconnection. l'IEEE, 2012

- **NGAMROO L.** A stabilization of frequency oscillations using a power modulation control of HVDC link in a parallel AC-DC interconnected system. *POWER CONVERSION CONFERENCE,* 02 Avril 2002, vol. 3